# EUROPÄISCHE PATENTSCHRIFT

(11) **EP 0 514 672 B1**
(45) Veröffentlichungstag und Bekanntmachung des Hinweises auf die Patenterteilung: **19.07.1995**
(21) Anmeldenummer: 92106729.4
(22) Anmeldetag: 20.04.1992
(51) Int. Cl.: B62D 47/02, B62D 53/08

(54) **Einrichtung zur Dämpfung bzw. Steuerung der Knickbewegungen zwischen den Teilfahrzeugen eines Gelenkfahrzeugs**
Device for damping or controlling jack-knifing between the sections of an articulated vehicle
Dispositif pour amortir respectivement commander la mise en portefeuille entre les véhicules partiels d'un véhicule articulé

(30) Priorität: 22.05.1991 DE 4116684
(43) Veröffentlichungstag der Anmeldung: 25.11.1992
(73) Patentinhaber: HÜBNER Gummi- und Kunststoff GmbH, D-34123 Kassel (DE)
(72) Erfinder:
(74) Vertreter: Walter, Helmut, Dipl.-Ing.

(56) Entgegenhaltungen:
- EP-A- 0 217 058
- GB-A- 2 019 332
- US-A- 4 744 581

## Beschreibung

Es sind Gelenkfahrzeuge, insbesondere Gelenkomnibusse bekannt, bei denen zwei Teilfahrzeuge über ein Drehgelenk miteinander gekuppelt sind, dessen einer Drehkranz auf dem hinteren Ende des vorausfahrenden Teilfahrzeugs abgestützt ist und dessen anderer Drehkranz dem vorderen Ende des nachfahrenden Teilfahrzeugs zugeordnet und in dem erstgenannten Drehkranz abgestützt ist. Um bei längeren Geradeausfahrten die Fahrt des Fahrzeugs zu stabilisieren, sind zwischen beiden Teilfahrzeugen Dämpfer eingebaut.

Bisher arbeitet die Dämpfungseinrichtung mit zwei Dämpfungszylindern, von denen jeweils einer Schwenkbewegungen des einen Teilfahrzeugs gegenüber dem anderen Teilfahrzeug in einer Richtung entgegenwirkt. Bei entsprechender Steuerung der Füllung der Dämpfungszylinder können mit ihrer Hilfe Schwenkbewegungen gedämpft, blockiert oder nach einer gewollten Gesetzmäßigkeit bewirkt werden.

Bedingt durch diese Anordnung ist die Funktion der Zwei-Zylinder-Ausführung bei Volleinschlag entgegen den Erfordernissen, weil bei Geradeausfahrt beide Zylinder zum Einsatz kommen. Bei voller Knickfahrt ist jeweils nur ein Zylinder im Eingriff, weil der andere Zylinder den Mittelpunkt überschritten hat.

Ein Gelenkfahrzeug mit einer völlig anderen Art der Verbindung zwischen beiden Teilfahrzeugen ist in der GB-2 019 332 A beschrieben. Dort ragt das nachfolgende Teilfahrzeug mit einem Königszapfen an seinem vorderen Ende in eine Lagerbüchsenstruktur am hinteren Ende des vorderen der beiden Teilfahrzeuge, wobei Königszapfen und Lagerhülse dadurch drehfest miteinander gekuppelt sind, daß die Königszapfen außen, die Lagerhülse innen als ein Vierkant ausgebildet sind. Die Lagerhülsenstruktur ist drehbar auf einer Drehscheibe abgestützt, um Knickbewegungen zwischen beiden Teilfahrzeugen möglich zu machen. Diese Knickbewegungen werden durch eine Dämpfungseinrichtung gedämpft. Die Dämpfungseinrichtung weist zwei Zahnfolgen bzw. Zahnräder auf, beide Zahnfolgen bzw. Zahnräder wirken zusammen und bilden eine Verzahnung, wobei ein Teil der Verzahnung dem vorderen, der andere dem nachfolgenden Teilfahrzeug zugeordnet ist. Die Relativbewegungen zwischen den beiden Verzahnungen bzw. Zahnrädern werden durch zwei Kolbenzylindereinheiten gedämpft, deren Längsachsen parallel zueinander in Fahrzeugslängsrichtung zu beiden Seiten des Königszapfens verlaufen. Die Kolbenzylindereinheiten dämpfen also die Knickbewegungen zwischen den beiden Teilfahrzeugen, indem sie die Relativbewegungen zwischen den beiden Teilen der Verzahnung dämpfen.

Eine Einrichtung zum Dämpfen der Knickbewegungen zwischen den Teilfahrzeugen eines Gelenkomnibusses, die der vorliegenden Erfindung näher stehet und die Merkmale des Oberbegriffs des Anspruchs 1 aufweist, ist in EP-0217058 A1 offenbart. Die beiden Teilfahrzeuge sind an den einander zugeordneten Enden über ein Drehkranzgelenk miteinander verbunden, wobei jedem der Teilfahrzeuge einer der Drehkränze zugeordnet ist. Konzentrisch zu der durch das Drehkranzgelenk gehenden Schwenkachse ist ein horizontaler Zahnkranz angeordnet, der mit einem Ritzel in Eingriff steht, das auf der Welle einer Verdrängerpumpe als eigentlicher Dämpfungseinrichtung sitzt. Der Zahnkranz ist dem einen, das Ritzel dem anderen Teilfahrzeug zugeordnet. Saug- und Druckseite der Verdrängerpumpe sind durch eine Druckleitung miteinander verbunden, die absperrbar ist, um dem Abknicken der Teilfahrzeuge relativ zueinander entgegenzuwirken.

Die vorliegende Erfindung geht nun von einer solchen Einrichtung aus mit der Maßgabe, daß statt der Verdrängerpumpe mit einem gemäß dem Ritzel drehbaren Rotor eine Dämpfungseinrichtung Verwendung findet, die in an sich bekannter Weise einen Zylinder und einen darin translatorisch verstellbaren Kolben aufweist, der zwei Zylinderräume voneinander trennt, die durch eine Drosseleinrichtung miteinander in Verbindung stehen, wobei der Kolben über Kolbenstangen mit dem einen, der Zylinder mit dem anderen Teilfahrzeug verbunden sind und die horizontale Längsachse der Dämpfungs- bzw. Steuereinrichtung die Längsachse des Fahrzeuges unter einem Winkel von 90° schneidet, wenn das Fahrzeug geradeaus fährt. Gemäß der Erfindung ist nun unter Verwendung einer solchen Dämpfungseinrichtung der Zylinder dem zugehörigen Teilfahrzeug so gelenkig zugeordnet, daß die Kolbenstangenbewegung wie die Kolbenbewegungen auf einer Geraden erfolgen.

Während bei bekannten Dämpfungseinrichtungen unter Verwendung von Kolben-Zylindereinheiten die Kolbenstangen an den Kolben gelenkig angeschlossen sind und die Kolbenstangen bei Kolbenbewegungen Schwenkbewegungen um diese Anschlußgelenke ausführen (US-A-4744581), führen bei der Erfindung die Kolbenstangen Bewegungen auf einer Geraden aus.

Damit wird durch die Erfindung die Aufgabe gelöst, eine Gelenkdämpfungs- und gegebenenfalls Steuerungseinrichtung vorzuschlagen, die in besonderem Maße die Probleme berücksichtigt, die bei Gelenk-fahrzeugen mit Drehkrenzgelenken vorherrschen, und die einfacher als bisher bekannten Lösungen ist, wobei mit nur einem Dämpfungszylinder ausgekommen werden kann.

Die erfindungsgemäße Lösung ist inbesondere deshalb in besonderem Maße baulich einfach, weil die Kolbenstangen an beiden Enden gelenklos angeschlossen werden können, was die Verbindung mit dem Kolben und die Herausführung aus dem Kolben und die Verbindung mit dem zugehörigen Teilfahrzeug erheblich vereinfacht.

Dabei kann der innere der beiden konzentrisch ineinander angeordneten Drehkränze eine Innenverzahnung aufweisen, die mit einem Zahnrad im von beiden Drehkränzen umschlossenen Freiraum zusammenwirkt; das in Wirkverbindung mit dem zweiten der Teilfahrzeuge steht. Das Zahnrad kann mit einer Zahnstange zusammenwirken, die mit einer Stellzylinderanordnung bzw. einem Hydromotor zusammenwirkt, der in Wirkverbindung mit dem zweiten Teilfahrzeug bzw. dem zweiten Drehkranz steht. Äußerer Drehkranz, Zahnrad und gegebenenfalls Zahnstange mit Stellzylinderanordnung bzw. Hydromotor sind vorzugsweise auf einer gemeinsamen Grund- bzw. Befestigungsplatte angeordnet.

Gemäß einer Fortbildung dieser Lösung ist dem einen der beiden Drehkränze eine Verzahnung zugeordnet, die mit einer Gegenverzahnung in Eingriff steht, die dem anderen Drehkranz in der Weise zugeordnet ist, daß sie am einen Ende eines zweiarmigen Hebels angeordnet ist, dessen anderes Ende um eine vertikale Achse schwenkbar am Zylinder einer Kolben-Zylinderanordnung angelenkt ist und der zwischen seinen beiden Enden um die vertikale Achse eines Gelenkes schwenkbar ist, das einem mit dem anderen der beiden Drehkränze verbundenen Bauteil zugeordnet ist, an dem auch die beiden äußeren Enden der Kolbenstangen angelenkt sind, deren inneren Enden dem Kolben der Kolbenzylinderanordnung zugeordnet sind.

Diesen beiden Lösungen liegt das Bestreben zugrunde, den Bereich außerhalb des Drehgelenks möglichst uneingeschränkt zur Verfügung zu haben und demzufolge sind bei jeder der beiden Lösungen die Teile der Einrichtung zur Dämpfung und/oder Steuerung der Knickbewegungen zwischen zwei Teilfahrzeugen eines Gelenkfahrzeuges weitestgehend in dem von den Drehkränzen des Drehgelenks umschlossenen Freiraum angeordnet.

Die weitere Ausbildung der Erfindung geht von der Überlegung aus, daß die Anordnung der Dämpfungs- bzw. Steuerungseinrichtung innerhalb des vom Drehgelenk definierten Freiraums durchaus erhebliche Vorteile bezüglich der Konzeption des Gelenkfahrzeugs in seiner Gesamtheit haben kann, daß es jedoch in anderen Fällen auf diesen Vorteil nicht so sehr ankommt, sondern eher auf die Möglichkeit, diese Dämpfungs- bzw. Steuerungseinrichtung möglichst gut zugänglich zu machen.

Weitere Aufgabe der Erfindung ist es demzufolge, die vorgeschlagenen Lösungen so abzuändern, daß die Dämpfungs- bzw. Steuerungseinrichtung gut zugänglich ist, um bequem montiert, demontiert und gewartet werden zu können.

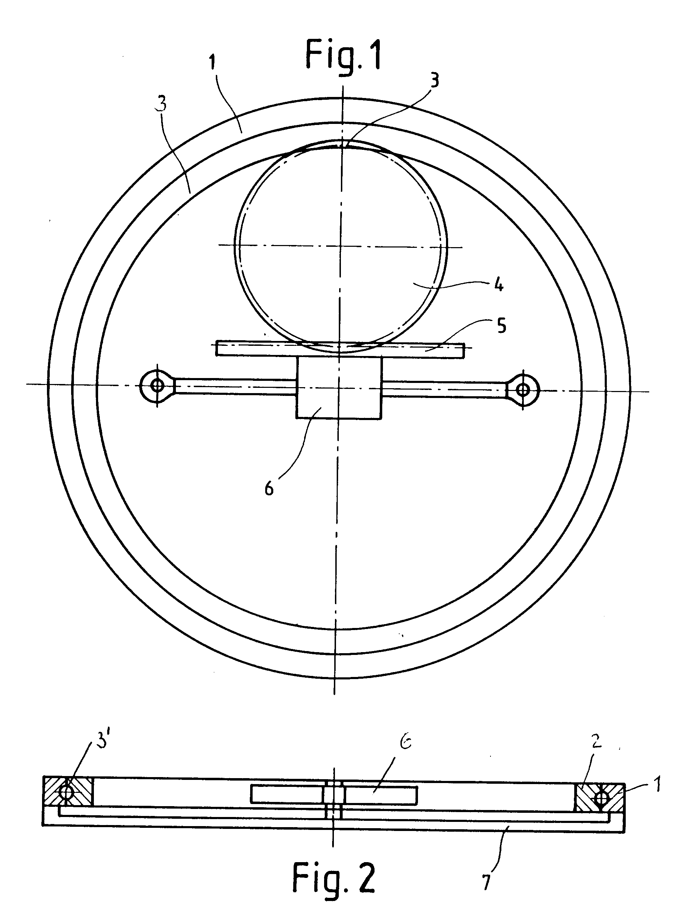

Eine erfindungsgemäße Einrichtung ist schematisch in der Zeichnung dargestellt, und zwar in Fig. 1 als Draufsicht und in Fig. 2 als Schnitt nach der Linie II-II in Fig. 1.

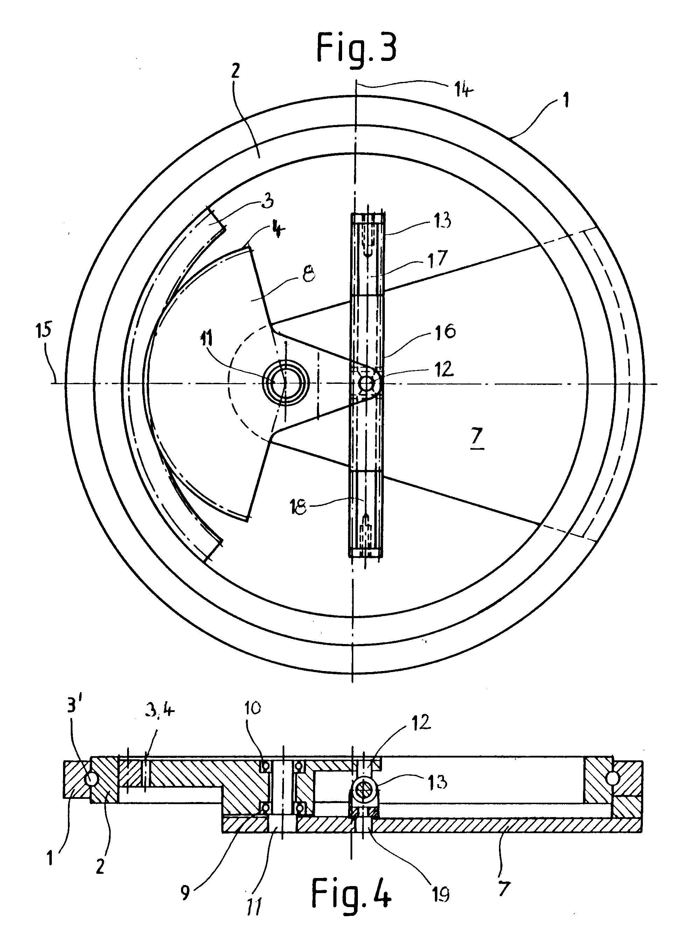

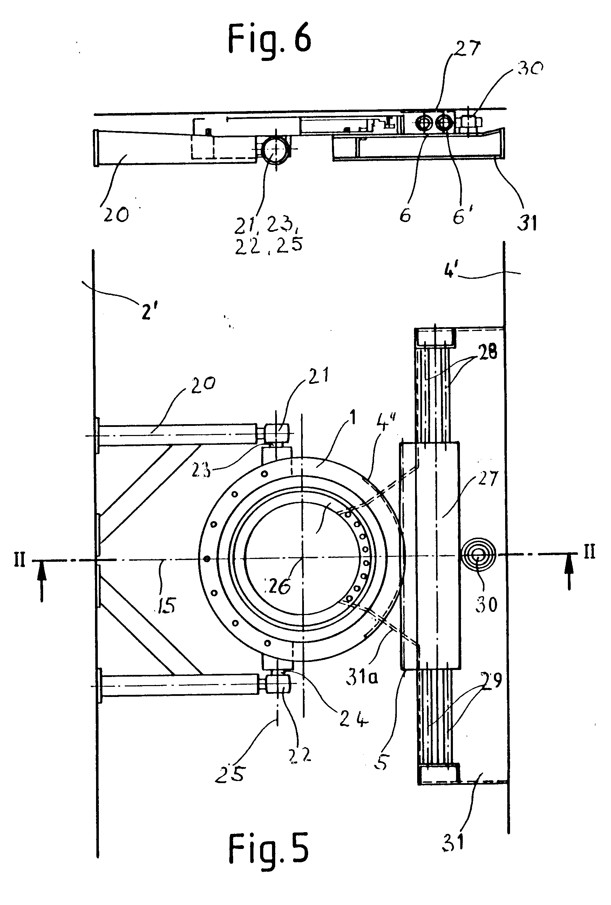

Ausführungsformen der Erfindung sind in der Zeichnung schematisch dargestellt und nachfolgend erläutert, dabei ist
eine erste Ausführungsform in Fig. 1 als Draufsicht und in Fig. 2 als Seitenansicht dargestellt; sie ist Gegenstand der Ansprüche 1 bis 4,
eine zweite Ausführungsform ist in Fig. 3 als Draufsicht und in Fig. 4 als Schnitt nach der Linie II - II in Fig. 3 dargestellt; sie ist Gegenstand der Ansprüche 1 und 5,
eine dritte Ausführungsform in Fig. 5 als Draufsicht und in Fig. 6 als Schnitt nach der Linie II - II in Fig. 5 dargestellt; sie ist Gegenstand der Ansprüche 1 und 6 bis 8.

### 1. Ausführung gemäß Fig.1, 2 und Ansprüchen 1 bis 4

Das Drehgelenk weist einen äußeren Ring oder Drehkranz 1 des einen Teilfahrzeugs und einen inneren Ring oder Drehkranz 2 des zweiten Teilfahrzeugs auf. Der dem vorderen Teilfahrzeug zugeordnete Ring ist auf diesem abgestützt, wenn dieses üblicherweise an beiden Enden Achsen bzw. Räder hat. Auf diesem Ring ist der dem hinteren Teilfahrzeug zugeordnete Ring abgestützt, wenn dieses in üblicher Weise auf dem vorderen Teilfahrzeug aufgesattelt ist. Die Drehbewegungen zwischen beiden Ringen sind durch in der Zeichnung symbolisch dargestellte Wälzkörper 3' möglich.

Erfindungsgemäß ist nun der innere Ring 2 mit einer Innenverzahnung (Zahnfolge) 3 versehen, die als endlos umlaufender Zahnkranz oder als Zahnkranzsegment ausgebildet sein kann.

Mit dieser Innenverzahnung 3 wirkt ein Zahnrad 4 zusammen. Dieses Zahnrad (Zahnfolge) 4 wirkt mit einer Zahnstange 5 zusammen, die mit dem Gehäuse eines Hydraulikzylinders oder eines Hydraulikmotors fest verbunden ist. Hydraulikzylinder bzw. -motor ist in seiner Gesamtheit mit 6 bezeichnet. Der Hydraulikzylinder 6 ist in üblicher Weise aufgebaut, d.h. in seinem mit einem Fluid gefüllten Innenraum ist ein Drosselbohrungen umschließender Kolben angeordnet, an dessen beiden Seiten je eine der beiden Kolbenstangen befestigt ist, die aus beiden Gehäuseenden herausgeführt ist. Soll ein Hydraulikmotor verwendet werden, so findet ein Hydraulikmotor entsprechender Funktion Anwendung. Der Hydraulikzylinder kann mehrere hintereinander angeordnete Einzelhydraulikzylinder aufweisen, wenn zu beherrschende Kräfte und Einbauverhältnisse dies als zweckmäßiger erscheinen lassen. Die äußeren Enden der Kolbenstangen sind an einer Grund- oder Befestigungsplatte 7 angelenkt, die ihrerseits am äußeren der beiden Ringe 1,2 befestigt ist.

### 2. Ausführungsform gemäß Fig. 3,4 und gemäß Ansprüchen 1 und 5

Das Drehgelenk weist einen äußeren Ring oder Drehkranz 1 des einen Teilfahrzeugs und einen inneren Ring oder Drehkranz 2 des zweiten Teilfahrzeugs auf. Der dem vorderen Teilfahrzeug zugeordnete Ring ist auf diesem abgestützt, wenn dieses üblicherweise an beiden Enden Achsen bzw. Räder hat. Auf diesem Ring ist der dem hinteren Teilfahrzeug zugeordnete Ring abgestützt, wenn dieses in üblicher Weise auf dem vorderen Teilfahrzeug aufgesattelt ist. Zwischen diesen beiden Ringen kann ein dritter Ring angeordnet sein. Die Drehbewegungen zwischen den Ringen sind durch in der Zeichnung symbolisch dargestellte Wälzlager 3' möglich.

Erfindungsgemäß ist nun dem inneren Ring 2 ein Zahnsegment 3 mit einer Innenverzahnung zugeordnet, die auch als endlos umlaufender Zahnkranz ausgebildet sein kann.

Mit dieser Innenverzahnung des Zahnsegments 3 wirkt eine Verzahnung 4 zusammen. Diese Verzahnung 4 bildet als Außenverzahnung einen Teil des Außenumfangs eines schwenkbaren Hebels 8, der zweiarmig ist, wobei der Hebel 8 in zwei voneinander beabstandeten Lagern 9,10 um einen vertikalen Zapfen 11 schwenkbar gelagert ist. Am äußeren Ende des einen Armes dieses Hebels ist die vorerwähnte Außenverzahnung 4 angebracht. Am äußeren Ende des anderen Armes des zweiarmigen Hebels 8 ist dieser auf einem vertikalen Zapfen 12 schwenkbar gelagert. Der Lagerzapfen 11 ist am unteren Ende auf der Oberseite einer horizontalen Grundplatte 7 befestigt, die unter der gesamten Anordnung verläuft, unter dem inneren Ring 2 radial nach außen geführt ist und mit ihrem äußeren Ende an der Unterseite des äußeren Rings 1 befestigt ist. Der vertikale Zapfen 12 ist an seinem unteren Ende auf der Oberseite eines Zylinders 13 befestigt, der in dem von den Ringen 1,2 umschlossenen Freiraum etwa in einer Durchmesserebene der beiden Ringe angeordnet ist. In der neutralen Stellung, d.h. bei Geradeausfahrt beider Teilfahrzeuge und in der Draufsicht schneiden sich die Längsachse 14 des Zylinders 13 und die Verbindungslinie 15 beider Zapfen 11 und 12 unter einem Winkel von 90° und zu der Linie 15 liegt die Verzahnung 3,4 symmetrisch auf beiden Seiten. Der Zylinder 13 umschließt einen Kolben 14 der zwei Hydraulikräume innerhalb des Zylinders 13, die durch Drosselbohrungen im Kolben 16 miteinander in Verbindung stehen und/oder mit nicht gezeichneten Hydraulikvorratsbehältern gesteuert in Verbindung stehen. Auf beiden Seiten ist dem Kolben 16 je eine Kolbenstange 17 bzw. 18 zugeordnet. Je eine der beiden Kolbenstangen 17,18 ist aus einer der beiden Kolbenstirnseiten herausgeführt und die äußeren Enden der beiden Kolbenstangen sind mit der Grundplatte 7 verbunden und an dieser in einer "drehbaren Zylinderaufnahme" 19 angelenkt.

Damit ist das bereits in einem anderen Fall vorgeschlagene System mit innen verzahntem Drehkranz bzw. angeschraubtem Zahnsegment weiterentwickelt. Bei einem großen Winkeleinschlag von maximal 54° nach rechts und 54° nach links kann in der bereits vorgeschlagenen Lösung der entstehende Weg nur dann berücksichtigt werden, wenn der im Zusammenhang mit der vorliegenden Ausführung mit 13 bezeichnete Zylinder ein Hydraulikmotor ist. Ein solcher Hydraulikmotor hat jedoch einen großen Platzbedarf und er ist vielteilig, also teuer und störanfällig. Insofern ist die Lösung mit einem Zylinder und durchgehender Kolbenstange angeraten. Um einen Zylinder in dieser Bauform einsetzen zu können, auch wenn große Winkeleinschläge zu berücksichtigen sind, wird bei der Erfindung die abgewinkelte Länge durch z.B. 54° Winkeleinschlag untersetzt. Dies geschieht mit der dargestellten Zahnsegmentpaarung 3,4 und einer entsprechenden Dimensionierung der Achsemaße und des Durchmessers der Zahnsegmentpaarung. Zahnrad oder Zahnsegment bzw. Zahnsegmentpaarung sind also erfindungsgemäß so gestaltet, daß eine Untersetzung der Strecke stattfindet. Erfindungswesentlich ist dabei die Anordnung des Zylinders über zwei Zentralzapfen am Kolben und am Zylinder, d.h. den Zapfen 12 zwischen dem Hebel 8 und dem Zylinder 13 sowie den Zapfen 19 zwischen den Enden der durchgehenden Kolbenstange 17,18 und der Grundplatte 7.

### 3.Ausführungsform gemäß Fig. 5,6 und Ansprüchen 1 und 6 bis 8.

Das Drehgelenk weist einen äußeren Ring oder Drehkranz 1 des einen, bei Vorwärtsfahrt nachfolgenden Teilfahrzeugs 2' und einen inneren Ring oder Drehkranz 2 des zweiten, bei Vorwärtsfahrt vorderen Teilfahrzeugs 4' auf. Der dem vorderen Teilfahrzeug 4' zugeordnete Ring 2 ist auf diesem abgestützt, wenn dieses üblicherweise an beiden Enden Achsen bzw. Räder hat. Auf diesem Ring 2 ist der dem hinteren Teilfahrzeug 2' zugeordnete Ring 1 abgestützt, wenn dieses in üblicher Weise auf dem vorderen Teilfahrzeug 4' aufgesattelt ist. Drehbewegungen zwischen beiden horizontal liegenden Ringen 1,2 sind durch nicht dargestellte Wälzkörper möglich.

Am vorderen Ende des nachfahrenden der beiden Gelenkfahrzeuge ist ein in sich starres und starr angeschlossenes Podest 20 befestigt, an dessen vorderem Ende symmetrisch zur Fahrzeuglängsachse 15 (Draufsicht und Geradeausfahrt unterstellt) zwei Augen 21,22 angeordnet sind, die drehbar auf zwei seitlichen, gleichachsigen horizontalen Querzapfen 23,24 des Außenrings 1 gelagert sind. Bei dieser Lagerung ist durch die beispielsweise Anwendung von Gummihülsen eine Schrägstellung zwischen der Längsachse der Augen 21,22 einerseits und der Längsachse der Querzapfen 23,24 andererseits in Grenzen zulässig, um Wankbewegungen der beiden Teilfahrzeuge 2',4' relativ zueinander zuzulassen. Knickbewegungen zwischen den Teilfahrzeugen in vertikaler Richtung, d.h. um eine horizontale Querachse 25 sind durch Drehbewegungen zwischen Augen 21,22 und Querzapfen 23,24 um deren im Regelfall achsgleichen Längsachsen, d.h. um die Querachse 25 möglich und Schwenk- bzw. Knickbewegungen zwischen beiden Teilfahrzeugen um eine vertikale Hochachse 26, d.h. in einer horizontalen Ebene sind durch relative Drehbeweungen zwischen den beiden Drehkränzen 1 und 2 möglich. Ersichtlich schneiden sich die Längsachse 15 und die Querachse 25 nicht im Mittelpunkt des Drehgelenks, sondern die Querachse 25 ist bezüglich dieses Drehgelenkmittelpunkts (der mit der Draufsichtdarstellung der Hochachse 26 in Fig.5 zusammenfällt) etwas nach hinten verlegt.

Erfindungsgemäß ist nun der äußere Ring 1 mit einer Außenverzahnung versehen, die als endlos umlaufender Zahnkranz vorzugsweise aber als Zahnkranzsegment ausgebildet sein kann.

Mit dieser Außenverzahnung 4'' wirkt eine Zahnstange 5 zusammen, die mit dem gemeinsamen Gehäuse 27 zweier paralleler und gleichwirkender Hydraulikzylinder 6,6' fest verbunden ist. Jeder der Hydraulikzylinder ist in üblicher Weise aufgebaut, d.h. in seinem mit einem Fluid gefüllten Innenraum ist ein Drosselbohrungen umschließender Kolben angeordnet, an dessen beiden Seiten je eine der beiden Kolbenstangen 28,29 befestigt ist, die aus beiden Gehäuseenden herausgeführt ist. Das Gehäuse 27 der Hydraulikzylinder 6,6' ist um einen vertikalen Zapfen 30 schwenkbar, der einem starren und starr angeschlossenen Podest 31 am hinteren Ende des vorausfahrenden Fahrzeugs 4' befestigt ist, an dem auch die äußeren Enden der Kolbenstangen 28,29 befestigt sind und das schließlich am äußeren Ende des Podestteils 31a den inneren Ring 2 trägt.

## Patentansprüche

1. Einrichtung zur Dämpfung bzw. Steuerung der Knickbewegung zwischen den Teilfahrzeugen (2',4') eines Gelenkomnibusses, wobei die beiden einander zugekehrten Enden der Teilfahrzeuge (2',4') über ein Drehkranzgelenk (1,2) miteinander in Verbindung stehen, von dem ein Drehring (1) dem einen (2'), ein zweiter zum ersten Drehring konzentrischer Drehring (2) dem anderen (4') der beiden Teilfahrzeuge (2',4') zugeordnet ist und die Relativbewegungen zwischen beiden Drehringen (1,2) zur Dämpfung bzw. Steuerung der Knickbewegungen zwischen beiden Teilfahrzeugen um die vertikale Drehgelenkachse (12) zwischen beiden Fahrzeugen gedämpft bzw. gesteuert wird, wobei weiter jedem der beiden Teilfahrzeuge eine Zahnfolge einer Verzahnungspaarung (3,4) zugeordnet ist, von denen die eine Zahnfolge der Verzahnungspaarung, dem Umfang des einen Drehringes folgend, diesem zugeordnet ist und die zweite Zahnfolge dem dem anderen Drehring zugeordneten Teilfahrzeug über eine mit dem Prinzip der Fluidverdrängung arbeitenden Dämpfungs- bzw. Steuerungseinrichtung zugeordnet ist, um die Relativbewegungen zwischen beiden Zahnfolgen (3,4) zu dämpfen bzw. zu steuern, **dadurch gekennzeichnet, daß** bei Ausbildung der Dämpfungseinrichtung in an sich bekannter Weise derart, daß in einem Zylinder translatorisch ein Kolben verstellbar ist, die Zylinderräume zu beiden Seiten des Kolbens über eine Drosseleinrichtung miteinander verbunden sind und der Kolben dem einen, der Zylinder dem anderen der beiden Teilfahrzeuge zugeordnet ist, die horizontale Längsachse der Dämpfungs- bzw. Steuerungseinrichtung die Längsachse des Fahrzeuges schneidet unter einem Winkel, der bei Geradeausfahrt des Fahrzeuges 90° beträgt und der Zylinder dem anderen Teilfahrzeug derart gelenkig zugeordnet ist, daß die Kolbenstangenbewegungen wie die Kolbenbewegungen auf einer Geraden erfolgen.

2. Einrichtung nach Anspruch 1, dadurch gekennzeichnet, daß der innere (2) der beiden konzentrisch ineinander angeordneten Drehringe (1, 2) eine Innenverzahnung (3) aufweist, die mit einem Zahnrad (4) im von beiden Drehringen (1, 2) umschlossenen Freiraum zusammenwirkt, das in Wirkverbindung mit dem zweiten der Teilfahrzeuge steht.

3. Einrichtung nach Anspruch 2, dadurch gekennzeichet, daß das Zahnrad (4) mit einer Zahnstange (5) zusammenwirkt, die mit einer Stellzylinderanordnung (6) bzw. einem Hydromotor zusammenwirkt, der in Wirkverbindung mit dem zweiten Teilfahrzeug bzw. dem zweiten Drehring steht.

4. Einrichtung nach Anspruch 2 oder 3, dadurch gekennzeichnet, daß äußerer Drehring (1), Zahnrad (4) und gegebenenfalls Zahnstange (5) mit Stellzylinderanordnung (6) bzw. Hydromotor auf einer gemeinsamen Grund- bzw. Befestigungsplatte (7) angeordnet sind.

5. Einrichtung nach Anspruch 1, dadurch gekennzeichnet, daß dem einen (2) der beiden Drehringe (1, 2) eine Zahnfolge (3) zugeordnet ist, die mit einer Gegenzahnfolge (4) in Eingriff steht, die dem anderen Drehring (1) in der Weise zugeordnet ist, daß sie am einen Ende eines zweiarmigen Hebels (8) angeordnet ist, dessen anderes Ende um eine vertikale Achse (12) schwenkbar dem Zylinder (13) einer Kolben-Zylinderanordnung (13, 17, 18) angelenkt ist und der zwischen seinen beiden Enden um die vertikale Achse (11) eines Gelenkes (9, 10, 11) schwenkbar ist, das einem mit dem anderen (1) der beiden Drehringe (1, 2) verbundenen Bauteil (7) zugeordnet ist, an dem auch die beiden äußeren Enden der Kolbenstangen (17, 18) angelenkt sind, deren inneren Enden dem Kolben der Kolbenzylinderanordnung (13) zugeordnet sind.

6. Einrichtung nach Anspruch 1, dadurch gekennzeichnet, daß die Zahnfolge des äußeren Drehkranzes (1) eine Außenverzahnung (4) des äußeren Drehkranzes (1) des einen der einen (2) der beiden Teilfahrzeuge (2', 4') und die dem anderen, innere Drehkranz (2) zugeordnete Zahnfolge (5) eine in Querrichtung des Fahrzeuges (2', 4') angeordnete Zahnstange (5) ist, die dem Gehäuse (27) eines Stellzylinders (6, 6', 27 bis 29) zugeordnet ist, der um einen vertikalen Zapfen (30) des anderen (4) der beiden Teilfahrzeuge schwenkbar gelagert ist und dessen aus den Gehäuseenden herausgeführten Kolbenstangen (28, 29) ebenfalls am anderen der beiden Teilfahrzeuge abgestützt sind.

7. Einrichtung nach Anspruch 6, dadurch gekennzeichnet, daß der äußere Drehkranz (1) der dem bei der Vorwärtsfahrt nachfahrenden Teilfahrzeug (2') zugeordnete, der innere Drehkranz (2) der dem bei der Vorwärtsfahrt vorausfahrenden Teilfahrzeug (4') zugeordnete Drehkranz ist.

8. Einrichtung nach Anspruch 6 oder 7, dadurch gekennzeichnet, daß der Stellzylinder zwei parallele und gleichwirkende Zylinder (6, 6') in einem gemeinsamen, schwenkbar gelagerten Gehäuse (27) aufweist und daß jedem der beiden Zylinder ein Kolben mit zwei einander entgegengesetzt gerichtet aus dem Gehäuse herausgeführten Kolbenstangen (28, 29) zugehörig ist, wobei die äußeren Enden der Kolbenstangen an dem Teilfahrzeug (4') abgestützt sind, an dem das Gehäuse schwenkbar gelagert ist.

## Claims

1. A system for damping or controlling the pivoting movement between the vehicle elements (2', 4') of an articulated bus, those two ends of the vehicle elements (2', 4') which face one another being interconnected by way of a ring mount joint (1, 2), one ring (1) thereof being associated with one (2') of the two vehicle elements (2', 4') and a second ring (2) which is concentric of the first ring (1) being associated with the second (4') of the two vehicle elements (2', 4'), the relative movements between the two rings (1, 2) being damped or controlled in order to damp or control the pivoting movements between the two vehicle elements around the vertical pivot axis (12) between them, a tooth sequence of two tooth systems (3, 4) being associated with each of the two vehicle elements, the first tooth sequence following the periphery of the first ring and being associated therewith while the second tooth sequence is associated with the vehicle element associated with the second ring by way of a fluid displacement type damping or control system in order to damp or control the relative movements between the two tooth sequences (3, 4), characterised in that if the damping system is so devised in known manner that a piston is movable in translation in a cylinder, the cylinder chambers on both sides of the piston are interconnected by a restrictor and the piston is associated with one of the two vehicle elements and the cylinder with the other such element, the horizontal longitudinal axis of the damping or control system intersects the vehicle longitudinal axis at an angle which on straight-ahead travel of the vehicle is 90° and the cylinder is so pivotally associated with the other vehicle element that the piston rod movements are, like the piston movements, effected on a straight line.

2. A system according to claim 1, characterised in that the inner (2) of the two concentrically arranged rings (1, 2) has an internal toothing (3), the same co-operating with a gear (4) disposed in the space bounded by the two rings (1, 2), the gear (4) being operatively connected to the second vehicle element.

3. A system according to claim 2, characterised in that the gear (4) co-operates with a toothed rack (5), the same co-operating with an actuator arrangement (6) or a hydraulic motor operatively connected to the second vehicle element or second ring.

4. A system according to claim 2 or 3, characterised in that the outer ring (1), gear (4) and, if required, the toothed rack (5) and actuator arrangement (6) or hydraulic motor are disposed on a common baseplate or fixing plate (7).

5. A system according to claim 1, characterised in that a tooth sequence (3) is associated with one (2) of the two rings (1, 2) and meshes with a companion tooth sequence (4) so associated with the other ring (1) as to be disposed at one end of a two-armed lever (8) whose other end is so articulated to the cylinder (13) of a reciprocating actuator arrangement (13, 17, 18) as to be pivotable around a vertical pivot pin (12), the lever (8) being pivotable between its two end positions around the vertical pivot pin (11) of a pivot (9, 10, 11) associated with a component (7) which is connected to the other ring (1) and to which the two outer ends of the piston rods (17, 18) are pivotally connected, the inner ends thereof being associated with the piston of the reciprocating actuator (13).

6. A system according to claim 1, characterised in that the tooth sequence of the outer ring (1) is an external toothing (4) of the outer ring (1) of the first vehicle element (2') and the tooth sequence (5) associated with the inner ring (2) is a toothed rack (5) which extends transversely of the vehicle (2', 4') and is associated with the casing (27) of a reciprocating actuator (6, 6', 27 to 29), the same being mounted for pivoting around a vertical pin (30) of the second vehicle element (4), the actuator piston rods (28, 29) which extend out of the casing ends also bearing on the second vehicle element (4).

7. A system according to claim 6, characterised in that the outer ring (1) is the ring associated with the vehicle element (2') which trails on forwards travel and the inner ring (2) is the ring associated with the vehicle element (4') which leads on forwards travel.

8. A system according to claim 6 or 7, characterised in that the actuator has two parallel cylinders (6, 6') which are operative in the same direction and are disposed in a common pivotally mounted casing (27) and a piston having two oppositely directed piston rods (28, 29) extending out of the casing is associated with each of the two cylinders, the outer ends of the piston rods bearing on the vehicle element (4') on which the casing is pivotally mounted.

## Revendications

1. Dispositif destiné à amortir et/ou à commander le mouvement de pivotement entre les véhicules partiels (2', 4') d'un bus articulé, les deux extrémités des véhicules partiels (2', 4') en regard l'une de l'autre, étant liées l'une à l'autre par l'intermédiaire d'une articulation à couronne de rotation (1, 2) dont un anneau de rotation (2) est associé à l'un (2'), et un second anneau de rotation (2) concentrique au premier anneau de rotation, est associé à l'autre (4') des deux véhicules partiels (2', 4'), et les mouvements relatifs entre les deux anneaux de rotation (1, 2) étant amortis ou commandés pour amortir et/ou commander les mouvements de pivotement entre les deux véhicules partiels autour de l'axe d'articulation de rotation vertical (12) entre les deux véhicules, une suite de dents d'une paire de dentures (3, 4) étant par ailleurs associée à chacun des deux véhicules partiels, l'une des suites de dents de la paire de dentures étant associée à l'un des anneaux de rotation en suivant la périphérie de celui-ci, et la seconde suite de dents étant associée au véhicule partiel associé à l'autre anneau de rotation, par l'intermédiaire d'un dispositif d'amortissement et/ou de commande fonctionnant selon le principe du déplacement de fluide, pour amortir ou commander les mouvements relatifs entre les deux suites de dents (3, 4), caractérisé en ce que pour une configuration du dispositif d'amortissement connue en soi et définie par un piston pouvant être déplacé en translation dans un cylindre, les chambres de cylindre de part et d'autre du piston sont reliées par l'intermédiaire d'un dispositif d'étranglement, et le piston est associé à l'un, et le cylindre à l'autre des deux véhicules partiels, et en ce que l'axe longitudinal horizontal du dispositif d'amortissement et/ou de commande coupe l'axe longitudinal du véhicule, en formant avec lui un angle qui vaut 90° pour une marche en ligne droite du véhicule, le cylindre étant associé de manière articulée à l'autre véhicule partiel, de façon telle, que les mouvements de la tige de piston tout comme les mouvements du piston s'effectuent le long d'une droite.

2. Dispositif selon la revendication 1, caractérisé en ce que l'anneau de rotation intérieur (2) des deux anneaux de rotation (1, 2) disposés concentriquement l'un dans l'autre, comprend une denture intérieure (3), qui coopère avec une roue dentée (4) dans l'espace libre enserré par les deux anneaux de rotation (1, 2), cette roue dentée étant en liaison fonctionnelle avec le second des véhicules partiels.

3. Dispositif selon la revendication 2, caractérisé en ce que la roue dentée (4) coopère avec une crémaillère (5), qui pour sa part coopère avec un ensemble à vérin (6) ou un moteur hydraulique en liaison fonctionnelle avec le second véhicule partiel ou le second anneau de rotation.

4. Dispositif selon la revendication 2 ou 3, caractérisé en ce que l'anneau de rotation extérieur (1), la roue dentée (4), et, le cas échéant, la crémaillère (5) comprenant l'ensemble à vérin (6) ou le moteur hydraulique, sont disposés sur une plaque de base et de fixation (7) commune.

5. Dispositif selon la revendication 1, caractérisé en ce qu'à l'un (2) des deux anneaux de rotation (1, 2) est associée une suite de dents (3) en prise avec une suite de dents conjuguée (4), qui est associée à l'autre anneau de rotation (1) de manière à être disposée à une extrémité d'un levier à double bras (8), dont l'autre extrémité est articulée de manière à pouvoir pivoter autour d'un axe vertical (12), sur le cylindre (13) d'un ensemble à cylindre et piston (13, 17, 18), et qui entre ses deux extrémités, peut pivoter autour de l'axe vertical (11) d'une articulation (9, 10, 11) qui est associée à une pièce (7) reliée à l'autre (1) des deux anneaux de rotation (1, 2), et sur laquelle sont également articulées les deux extrémités extérieures des tiges de piston (17, 18) dont les extrémités intérieures sont associées au piston de l'ensemble à cylindre et piston (13).

6. Dispositif selon la revendication 1, caractérisé en ce que la suite de dents de la couronne de rotation extérieure (1) est une denture extérieure (4) de la couronne de rotation extérieure (1) de l'un (2') des deux véhicules partiels (2', 4'), et la suite de dents (5) associée à l'autre couronne de rotation (2) intérieure, est une crémaillère (5) disposée dans la direction transversale du véhicule (2', 4') et associée au carter (27) d'un vérin (6, 6', 27 à 29), qui est monté de manière à pouvoir pivoter autour d'un tourillon vertical (30) de l'autre (4') des deux véhicules partiels, et dont les tiges de piston (28, 29) sortant hors des extrémités de carter s'appuient également sur l'autre des deux véhicules partiels.

7. Dispositif selon la revendication 6, caractérisé en ce que la couronne de rotation extérieure (1) constitue la couronne associée au véhicule partiel (2') suiveur dans le cas d'une marche avant, et la couronne de rotation intérieure (2) constitue celle associée au véhicule partiel (4') avant dans le cas d'une marche avant.

8. Dispositif selon la revendication 6 ou 7, caractérisé en ce que le vérin présente deux cylindres (6, 6') parallèles et à effet identique, dans un carter (27) commun monté de manière pivotante, et en ce qu'à chacun des deux cylindres est associé un piston comportant deux tiges de piston (28, 29) sortant hors du carter en étant orientées selon des directions opposées l'une à l'autre, les extrémités extérieures des tiges de piston s'appuyant sur le véhicule partiel (4') sur lequel est monté de manière pivotante, le carter.
